# EUROPÄISCHE PATENTSCHRIFT

(11) **EP 0 945 165 B1**
(45) Veröffentlichungstag und Bekanntmachung des Hinweises auf die Patenterteilung: **15.10.2003**
(21) Anmeldenummer: 99105440.4
(22) Anmeldetag: 17.03.1999
(51) Int. Cl.: B01D 53/94, B01J 20/04, F01N 3/08, B01J 20/08

(54) **Verfahren zur Entfernung von Schwefeloxiden aus Abgasen einer Brennkraftmaschine**
Process for removing sulphur oxides from internal combustion engine exhaust gases
Procédé pour éliminer d'oxydes de soufre de gaz d'échappement d'un moteur à combustion interne

(30) Priorität: 27.03.1998 DE 19813655
(43) Veröffentlichungstag der Anmeldung: 29.09.1999
(73) Patentinhaber: OMG AG & Co. KG, 63457 Hanau (DE)
(72) Erfinder: Strehlau, Wolfgang, Dr., 65538 Grosskrotzenburg (DE); Göbel, Ulrich, Dr., 65795 Hattersheim (DE); Domesle, Rainer, Dr., 63755 Alzenau-Kälberau (DE); Lox, Egbert, Dr., 63457 Hanau (DE); Kreuzer, Thomas, Dr., 61184 Karben (DE)
(74) Vertreter: Stellbrink, Axel

(56) Entgegenhaltungen:
- WO-A-91/10505
- WO-A-97/48480
- US-A- 4 883 783
- US-A- 5 547 648
- DATABASE CHEMABS [Online] CHEMICAL ABSTRACTS SERVICE, COLUMBUS, OHIO, US CORMA, A. ET AL: "Optimization of SOx additives of FCC catalysts based on MgO-Al2O3 mixed oxides produced from hydrotalcites" retrieved from STN Database accession no. 121:112942 CA XP002127473 & APPL. CATAL., B (1994), 4(1), 29-43 , 1994,

## Beschreibung

Die vorliegende Erfindung betrifft ein Verfahren zur Reinigung der Abgase einer Brennkraftmaschine umfassend Kontaktieren der Abgase mit einem Speichermaterial für Schwefeloxide, welches einen Magnesium-Aluminat-Spinell (MgO·Al₂O₃) enthält und als sogenannte Schwefelfalle zur Entfernung von Schwefeloxiden aus Sauerstoff enthaltenden Abgasen verwendet wird. Das Speichermaterial wird bei der katalytischen Abgasreinigung von Brennkraftmaschinen zur Entfernung der Schwefeloxide aus dem Abgas eingesetzt, um die Abgaskatalysatoren vor einer Vergiftung durch Schwefel zu schützen.

Im Abgas von Brennkraftmaschinen finden sich als wesentliche Schadstoffe Kohlenmonoxid CO, unverbrannte Kohlenwasserstoffe HC und Stickoxide NOₓ. Darüber hinaus enthält das Abgas noch geringe Anteile an Wasserstoff H₂ sowie Schwefeloxide SOₓ, die vom Schwefelgehalt des Kraftstoffes und der Schmieröle der Maschine herrühren. Durch moderne Abgaskatalysatoren können die Schadstoffe mit Ausnahme der Schwefeloxide im stöchiometrischen Betrieb einer Brennkraftmaschine zu einem hohen Prozentsatz in die unschädlichen Komponenten Wasser, Kohlendioxid und Stickstoff umgesetzt werden. Die für die Abgasreinigung von stöchiometrisch betriebenen Brennkraftmaschinen entwickelten Katalysatoren werden als Dreiwegkatalysatoren bezeichnet.

Moderne Brennkraftmaschinen werden zur Kraftstoffeinsparung zunehmend mit mageren Luft/Kraftstoff-Gemischen betrieben. Während die Reinigung der Abgase von stöchiometrisch betriebenen Brennkraftmaschinen einen sehr hohen Stand erreicht hat, stellt die Reinigung der Abgase von mager betriebenen Brennkraftmaschinen noch ein großes Problem dar. Während der überwiegenden Dauer ihres Betriebes arbeiten diese Brennkraftmaschinen mit Luftzahlen größer als 1,3. Ihr Abgas enthält etwa 3 bis 15 Vol.-% Sauerstoff. Mit der Luftzahl λ wird das auf stöchiometrische Bedingungen normierte Luft/Kraftstoff-Verhältnis bezeichnet.

Im Abgas von mager betriebenen Brennkraftmaschinen liegen also stark oxidierende Bedingungen vor. Unter diesen Bedingungen können die Stickoxide im Abgas nicht mehr auf einfache Weise zu unschädlichem Stickstoff umgesetzt werden.

Zur Lösung dieses Problems wurden unter anderem sogenannte Stickoxid-Speicherkatalysatoren entwickelt, die die Stickoxide unter mageren Abgasbedingungen zu Stickstoffdioxid oxidieren und dieses in Form von Nitraten abspeichern. Nach Erreichen der Speicherkapazität des Katalysators wird er regeneriert. Dies geschieht durch Anfetten des Abgases und gegebenenfalls durch Anheben der Abgastemperatur. Hierdurch werden die gespeicherten Nitrate zersetzt und als Stickoxide an den Abgasstrom abgegeben. Die freigesetzten Stickoxide werden dann am Speicherkatalysator unter Oxidation der im fetten Abgas enthaltenen reduktiven Komponenten (Kohlenwasserstoffe, Kohlenmonoxid und Wasserstoff) zu Stickstoff reduziert. Hierdurch erhält der Speicherkatalysator seine ursprüngliche Speicherkapazität zurück. Ein solcher Speicherzyklus dauert etwa 60 bis 100 Sekunden, wobei für die Regeneration etwa 0,5 bis 20 Sekunden benötigt werden.

Funktionsweise und Zusammensetzung von Stickoxid-Speicherkatalysatoren sind zum Beispiel aus der EP 0 560 991 B1 bekannt. Als Speichermaterial enthalten diese Katalysatoren wenigstens eine Komponente aus der Gruppe der Alkalimetalle (Kalium, Natrium, Lithium, Cäsium), der Erdalkalimetalle (Barium, Kalzium) oder der Seltenerdmetalle (Lanthan, Yttrium). Als katalytisch aktives Element enthält der Speicherkatalysator Platin. Die Aufgabe der katalytisch aktiven Komponente ist es einerseits, die Stickoxide im Abgas unter mageren Bedingungen zu Stickstoffdioxid zu oxidieren und die freigesetzten Stickoxide unter fetten Abgasbedingungen zu Stickstoff zu reduzieren.

Ein wesentliches Hindernis für den Einsatz von Stickoxid-Speicherkatalysatoren stellt der Gehalt des Abgases an Schwefeloxiden dar, da diese am Speicherkatalysator unter mageren Abgasbedingungen ebenfalls oxidiert werden und mit den Speicherkomponenten zu thermisch sehr stabilen Sulfaten reagieren, die während der normalen Regeneration des Speicherkatalysators nicht zerstört werden können. Somit vermindert sich die Speicherkapazität des Speicherkatalysators mit zunehmender Betriebsdauer, indem die Speicherkomponenten durch Sulfate blockiert werden.

Die Abspeicherung von Stickoxiden und Schwefeloxiden auf einem Speicherkatalystor zeigt eine ausgeprägte Temperaturabhängigkeit. Speicherung und Freisetzung der Stickoxide finden nur in einem eng begrenzten Temperaturintervall (Temperaturfenster) statt, welches zum Beispiel bei den häufig zum Einsatz kommenden Erdalkalimetalloxiden zwischen etwa 200 und 500°C liegt. Die untere Temperaturgrenze ist kinetisch bedingt, während die obere Grenztemperatur durch die thermische Stabilität der gebildeten Nitrate gegeben ist. Die Sulfate der Erdalkalimetalloxide werden erst bei noch höheren Temperaturen unter reduzierenden Abgasbedingungen zersetzt.

Zur Vermeidung einer Vergiftung des Speicherkatalysators mit Sulfaten wird gemäß der EP 0 582 917 A1 vorgeschlagen, die Vergiftung des Speicherkatalysators mit Schwefel durch eine stromaufwärts des Speicherkatalysators in den Abgasstrom eingefügte Schwefelfalle zu vermindern. Als Speichermaterialien für die Schwefelfalle werden Alkalimetalle (Kalium, Natrium, Lithium und Cäsium), Erdalkalimetalle (Barium und Kalzium) und Seltenerdmetalle (Lanthan, Yttrium) vorgeschlagen. Die Schwefelfalle weist dabei zusätzlich als katalytisch aktive Komponente Platin auf.

Nachteilig bei dem Vorschlag der EP 0 582 917 A1 ist allerdings, daß keine Entschwefelung der Schwefelfalle vorgesehen ist, das heißt nach Erreichen der Speicherkapazität der Schwefelfalle passieren die im Abgas enthaltenen Schwefeloxide die Schwefelfalle ungehindert und können den nachgeschalteten Stickoxid-Speicherkatalysator vergiften.

Eine Verbesserung dieses Konzeptes gibt die EP 0 625 633 A1 an. Gemäß dieser Schrift wird ebenfalls vor dem Stickoxid-Speicherkatalysator eine Schwefelfalle im Abgasstrom der Brennkraftmaschine angeordnet. Diese Kombination aus Schwefelfalle und Stickoxid-Speicherkatalysator wird so betrieben, daß unter mageren Abgasbedingungen Schwefeloxide auf der Schwefelfalle und die Stickoxide auf dem Stickoxid-Speicherkatalysator gespeichert werden. Durch periodisches Ändern der Abgasbedingungen von mager nach fett werden die auf der Schwefelfalle gespeicherten Sulfate zu Schwefeldioxid und die auf dem Stickoxid-Speicherkatalysator gespeicherten Nitrate zu Stickstoffdioxid zersetzt. Hierbei besteht jedoch die Gefahr, daß Schwefeldioxid und Stickstoffdioxid über dem Stickoxid-Speicherkatalysator miteinander zu Schwefeltrioxid und Stickstoffmonoxid reagieren und Schwefeltrioxid auf dem Stickoxid-Speicherkatalysator in Form von Sulfaten gespeichert wird.

Alternativ hierzu kann vorgesehen werden, die Abgastemperatur zur Entschwefelung der Schwefelfalle auf Werte anzuheben, die oberhalb der Grenztemperatur des Speicherkatalysators für die Speicherung der Stickoxide liegen. In diesem Fall ist sichergestellt, daß auf dem Speicherkatalysator während der Entschwefelung der Schwefelfalle keine gespeicherten Stickoxide mehr vorhanden sind. Die oben beschriebene Reaktion von Schwefeldioxid mit den Stickoxiden kann in diesem Fall nicht stattfinden. Dies setzt allerdings voraus, daß die Schwefeloxide erst oberhalb einer bestimmten Abgastemperatur von der Schwefelfalle freigesetzt werden, die unter Berücksichtigung einer möglichen Temperaturdifferenz zwischen Schwefelfalle und Speicherkatalysator oberhalb der oberen Grenztemperatur des Speicherkatalysators liegt.

Die Anforderungen an die Speichermaterialien für die Schwefelfalle bei Anwendung in den beschriebenen Verfahren erfordern eine hohe Speicherkapazität, eine Temperatur T_{S,DeSOx} (Entschwefelungstemperatur) für den Beginn der Entschwefelung, die sich durch bestimmte Maßnahmen an die Erfordernisse des Stickoxid-Speicherkatalysators und der Temperaturverhältnisse in der Abgasanlage anpassen läßt sowie eine möglichst hohe Zersetzungsrate für die Sulfate oberhalb der Entschwefelungstemperatur T_{S,DeSOx}.

US-A-5,547,648 beschreibt ein Verfahren zum Entfernen von SOₓ, NOₓ und CO aus Abgas. Dabei wird das Abgas mit einem festen Adsorptionsmittel in Kontakt gebracht, welches unter anderen ein Mg/Al-Spinel enthalten kann.

Es ist eine Aufgabe der vorliegenden Erfindung, ein Verfahren zur Reinigung der Abgase einer Brennkraftmaschine anzugeben, welches die beschriebenen Anforderungen weitgehend erfüllt.

Diese Aufgabe wird durch ein Verfahren zur Reinigung der Abgase einer Brennkraftmaschine umfassend Kontaktieren der Abgase mit einem Speichermaterial für Schwefeloxide gelöst, welches einen Magnesium-Aluminat-Spinell (MgO·Al₂O₃) enthält. Das Speichermaterial weist ein Molverhältnis von Magnesiumoxid zu Aluminiumoxid von über 1,1:1 auf und das im stöchiometrischen Überschuß vorhandene Magnesiumoxid ist homogen in hochdisperser Form im Speichermaterial verteilt.

Aus der US-A-4,883,783 ist die Verwendung von Mg/Al-Spinell zur Verminderung von Schwefeldioxid-Emissionen von katalytischen Crack-Anlagen bekannt. Gemäß dieser Patentschrift wird der Mg/Al-Spinell bevorzugt synthetisch hergestellt durch Reaktion eines wasserlöslichen, anorganischen Magnesiumsalzes mit einem wasserlöslichen Aluminatsalz. Magnesium- und Aluminatsalz werden in einem wäßrigen Medium aufgelöst. Dabei fällt ein Spinellvorläufer durch Neutralisation des Aluminats durch das saure Magnesiumsalz aus. Hierbei muß darauf geachtet werden, daß kein Überschuß des sauren Magnesiumsalzes oder des Aluminats angewendet wird, um einen Niederschlag von überschüssigem Magnesiumoxid oder Aluminiumoxid zu verhindern. Gemäß der Patentschrift enthält der Mg/Al-Spinell noch geringe Mengen wenigstens einer Alkalimetallkomponente, einer Kalziumkomponente, einer Bariumkomponente, einer Strontiumkomponenten und einer Berylliumkomponente. Darüber hinaus kann das Material noch eine Seltenerdmetall-Komponente enthalten.

Entgegen der Lehre dieser Patentschrift enthält das in erfindungsgemäßen Verfahren verwendete Speichermaterial Magnesiumoxid im stöchiometrischen Überschuß. Das überschüssige Magnesiumoxid ist homogen im Mg/Al-Spinell verteilt und stabilisiert seine spezifische Oberfläche auch bei Anwendung hoher Temperaturen. Zu diesem Zweck ist wenigstens ein molares Verhältnis von Magnesiumoxid zu Aluminiumoxid von 1,1:1 erforderlich. Bevorzugt werden molare Verhältnisse von 2:1 bis 10:1, insbesondere von 2:1 bis 6:1, angewendet.

Auf dem in erfindungsgemäßen Verfahren verwendeten Speichermaterial werden die Schwefeloxide im wesentlichen durch Reaktion mit dem überschüssigen Magnesiumoxid in Form von Magnesiumsulfat gespeichert. Die Stützstruktur aus Mg/Al-Spinell trägt nur zu einem geringen Teil zur Speicherfähigkeit bei. Das Speichermaterial weist eine gute Alterungsbeständigkeit auf, was darauf zurückgeführt wird, daß die Schwefeloxide bevorzugt mit dem hochdispersen Magnesiumoxid reagieren. Dadurch wird die hochoberflächige Stützstruktur des Materials vor einer Zerstörung durch Reaktion mit den Schwefeloxiden des Abgases geschützt.

Zur Speicherung der Schwefeloxide ist es erforderlich, daß diese zunächst zu Schwefeltrioxid oxidiert werden. Dies kann durch einen vorgeschalteten Oxidationskatalysator geschehen. Bevorzugt wird das Speichermaterial jedoch selbst mit katalytisch aktiven Komponenten für die Oxidation von Schwefeldioxid zu Schwefeltrioxid versehen. Hierfür eignen sich die Platingruppenmetalle Platin, Palladium und Rhodium, insbesondere das Platin, welches durch Imprägnieren mit einer löslichen Vorläuferverbindung in das Material eingebracht werden kann. Die Platingruppenmetalle werden in einer Konzentration von bis zu 5 Gew.-%, bezogen auf das Gesamtgewicht des Speichermaterials, in das Speichermaterial eingebracht.

Die auf dem Speichermaterial gespeicherten Sulfate werden durch Absenken der Luftzahl des Abgases unter 1 (Anfetten des Abgases) und Anheben der Abgastemperatur auf Werte über etwa 500°C zersetzt und in Form von Schwefeloxiden desorbiert. Das Material erhält durch diese "Entschwefelung" seine ursprüngliche Speicherkapazität zurück.

In einer bevorzugten Ausführungsform ist das Speichermaterial noch mit wenigstens einem der Erdalkalimetalloxide Kalziumoxid, Strontiumoxid und Bariumoxid in einer Menge von 1 bis 40 Gew.-%, bezogen auf das Gesamtgewicht des Materials, dotiert. Durch diese Dotierung kann die Temperatur für den Beginn der Entschwefelung zu höheren Werten hin verschoben werden. Diese Möglichkeit ist von besonderer Bedeutung für die Kombination der Schwefelfalle mit einem nachgeschalteten Stickoxid-Speicherkatalysator.

Zusätzlich kann das Speichermaterial ein oder mehrere Seltenerdoxide, insbesondere Ceroxid und Lanthanoxid enthalten, die die Zersetzung der gebildeten Sulfaten unter fetten Abgasbedingungen und bei erhöhten Temperaturen unterstützen. Der Zusatz der Seltenerdoxide zum Speichermaterial kann ebenfalls 1 bis 40 Gew.-%, bezogen auf das Gesamtgewicht des Materials, betragen. Ceroxid ist in Kombination mit Aluminiumoxid ein ungeeignetes Speichermaterial für Schwefeloxide (siehe Vergleichsbeispiel 3). In Verbindung mit dem in erfindungsgemäßen Verfahren verwendeten Speichermaterial wirkt es sich jedoch positiv auf die Kinetik der Entschwefelung aus.

Das in erfindungsgemäßen Verfahren verwendete Material weist eine spezifische Oberfläche (gemessen nach DIN 66132) zwischen 100 und 300 m²/g auf. Unter Temperaturbelastung verringert sich diese Oberfläche, beträgt jedoch immer noch mindestens 20 m²/g nach Kalzination bei 1050°C für die Dauer von 24 Stunden.

Das in erfindungsgemäßen Verfahren verwendete Speichermaterial wird bevorzugt durch Kalzination eines Magnesium/Aluminium-Hydrotalcits (Mg/Al-Hydrotalcit) hergestellt. Mg/Al-Hydrotalcit ist ein doppelschichtiges Hydroxid des Magnesiumoxids und Aluminiumoxids.

Seine stöchiometrische Zusammensetzung weist die Summenformel 6MgO·Al₂O₃·CO₂·12H₂O auf. Das molare Verhältnis von Magnesiumoxid zu Aluminiumoxid beträgt also 6. Kommerziell erhältlich sind Materialien mit molaren Verhältnissen von 1 bis 6. Die Herstellung von synthetischem Mg/Al-Hydrotalcit wird zum Beispiel in der WO 96/05140 beschrieben.

Zur Überführung des Mg/Al-Hydrotalcit in das Speichermaterial für Schwefeloxide wird er bei einer Temperatur von 400 bis 600°C für die Dauer von 1 bis 10, bevorzugt 4 Stunden, kalziniert. Der als Ausgangsmaterial verwendete Mg/Al-Hydrotalcit weist dabei das für das fertige Speichermaterial gewünschte Molverhältnis von Magnesiumoxid zu Aluminiumoxid auf. Durch die Kalzination wandelt sich der Hydrotalcit in stöchiometrisch zusammengesetzten Spinell (MgO·Al₂O₃) um, wobei das im stöchiometrischen Überschuß vorhandene Magnesiumoxid in feinster Verteilung im so gebildeten Speichermaterial vorliegt.

Die Kalzinierung des Mg/Al-Hydrotalcits vor der Verwendung als Speichermaterial ist nicht unbedingt erforderlich, da die Umwandlung des Hydrotalcits in Spinell auch während der Anwendung zum Beispiel durch die heißen Abgase der Brennkraftmaschinen erfolgen kann. Im Sinne einer reproduzierbaren Fertigung ist jedoch eine Kalzinierung des Hydrotalcits vor der Verwendung als Speichermaterial für Schwefeloxide zu empfehlen.

Vor oder nach der Kalzination werden die Dotierungselemente, gegebenenfalls die Seltenerdoxide und die katalytisch aktiven Komponenten durch Imprägnieren mit löslichen Vorläuferverbindungen in das Speichermaterial eingebracht. Anschließend wird das Material zur thermischen Zersetzung der Vorläuferverbindungen erneut kalziniert. Das Einbringen der zusätzlichen Stoffe in das Speichermaterial kann entweder gleichzeitig oder in beliebiger Reihenfolge nacheinander vorgenommen werden. Die Seltenerdoxide können auch als Feststoffe mit dem Speichermaterial gemischt werden.

Das Speichermaterial wird bei der Abgasreinigung von Kraftfahrzeugen verwendet. In diesem Fall kann es wie schon erläutert als separate Schwefelfalle eingesetzt, oder direkt in den vor Vergiftung durch Schwefel zu schützenden Stickoxid-Speicherkatalysator eingearbeitet werden. Die letztere Ausführungsform führt zu einer deutlichen Erhöhung der Schwefelresistenz des Stickoxid-Speicherkatalysators und kann die Verwendung einer separaten Schwefelfalle überflüssig machen.

Wird das Speichermaterial als separate Schwefelfalle eingesetzt, so ist zur Oxidation der Schwefeloxide des Abgases zu Schwefeltrioxid entweder ein vorgeschalteter Oxidationskatalysator erforderlich oder das Speichermaterial muß selbst mit katalytisch aktiven Komponenten zur Oxidation der Schwefeloxide versehen werden. Wird die Schwefelfalle in diesem Fall dicht hinter der Brennkraftmaschine angeordnet, so übernimmt sie auch gleichzeitig die Funktion eines Vorkatalysators.

Das Speichermaterial wird bevorzugt zur Herstellung von Schwefelfallen für die Reinigung der Abgase von mager betriebenen Brennkraftmaschinen verwendet. Zu diesem Zweck wird es allein oder in Mischung mit anderen Materialien in Form einer Beschichtung auf monolithische Tragkörper aufgebracht. Bei diesen Tragkörpern kann es sich um Wabenkörper aus Keramik oder Metall, um offenporige Keramikschäume oder um beliebige andere gasdurchlässige Tragstrukturen handeln. Die Konzentration des Speichermaterials auf diesen Tragkörpern liegt bevorzugt im Bereich zwischen 50 und 200 Gramm pro Liter Volumen des Tragkörpers.

Bei den in Mischung mit dem Speichermaterial verwendbaren Materialien kann es sich um hochoberflächige Materialien handeln, die üblicherweise bei der Herstellung von Autoabgaskatalysatoren als Trägermaterialien für die katalytisch aktiven Edelmetalle eingesetzt werden. Als hochoberflächig werden gewöhnlich Materialien mit einer spezifischen Oberfläche von mehr als 10 m²/g bezeichnet. Geeignete Materialien dieser Art sind aktives Aluminiumoxid, Titanoxid, Zirkonoxid, Siliziumdioxid, Mischoxide hiervon, Zeolithe oder physikalische Mischungen dieser Oxide. Das Speichermaterial kann dabei in einem Gewichtsverhältnis zu den Zusatzstoffen von 1:5 bis 20:1 stehen.

Die katalytisch aktiven Komponenten (Platin, Palladium, Rhodium, Ruthenium, Iridium, Osmium) werden durch Imprägnieren in die Schwefelfalle eingebracht. Die Schwefelfalle kann weiterhin mit Promotoren aus der Gruppe der Übergangsmetalloxide versehen werden. Geeignete Übergangsmetalle, die die katalytische Funktion der Schwefelfalle unterstützen, sind Zink, Nickel, Chrom, Kobalt, Kupfer und Silber.

Das Speichermaterial kann also in Kombination mit mehreren anderen Komponenten in Schwefelfallen eingesetzt werden. Eine bevorzugte Schwefelfalle besteht zum Beispiel aus einer Mischung aus Aluminiumoxid und dem Speichermaterial. Außerdem kann das Speichermaterial noch mit Erdalkalielementen dotiert sein. Prinzipiell sind auch diese zusätzlichen Komponenten der Schwefelfalle in der Lage, Schwefeltrioxid in Form von Sulfaten zu binden.

Wird zum Beispiel Aluminiumoxid als einziges Material eingesetzt, so werden die Schwefelkomponenten in Form von Aluminiumsulfat gebunden. Hierdurch verringert sich jedoch die spezifische Oberfläche des Aluminiumoxids stark. Dies hat zur Folge, daß die Bildungsrate von Aluminiumsulfat mit zunehmender Alterung der Schwerfelfalle zurückgeht. Durch Mischen des Aluminiumoxids mit dem erfindungsgemäßen Speichermaterial kann dieser Alterungsprozeß weitgehend verhindert werden, da sich in diesem Fall bevorzugt das stabilere Magnesiumsulfat bildet.

In den folgenden Beispielen und Vergleichsbeispielen werden verschiedene Formulierungen von Schwefelfallen mit und ohne Verwendung des Speichermaterials miteinander verglichen. Um die Vergleichbarkeit der verschiedenen Formulierungen zu gewährleisten, wurden die Mengen der einzelnen Komponenten jeweils so bemessen, daß die theoretische Gesamtspeicherkapazität der Schwefelfallen in allen Beispielen etwa 4,7 Mol Sulfat betrug. Hierzu wurde angenommen, daß Aluminiumoxid vollständig in Aluminiumsulfat und Magnesiumoxid vollständig in Magnesiumsulfat überführt werden kann. Ebenso wurde bei den Dotierungselementen vorgegangen. Die jeweilige Menge der Dotierungselemente wurde so bemessen, daß ihre theoretischen Speicherkapazität 0,17 Mol Schwefel pro Liter der Schwefelfallen betrug. Die Speicherkapazität des Spinells wurde als Summe der Speicherkapazitäten der in ihm enthaltenen Anteile an Magnesiumoxid und Aluminiumoxid berechnet.

Bei allen Schwefelfallen wurde als Edelmetallkomponente Platin verwendet.

Es zeigen
- **Figur 1-4:**: Entschwefelung der Schwefelfallen der Beispiele 2 bis 5
- **Figur 5-7:**: Entschwefelung der Schwefelfallen der Vergleichsbeispiele 1 bis 3
- **Figur 8:**: Entschwefelungsverhalten einer Schwefelfalle bei 640°C und Absenken der Luftzahl auf einen Wert von 0,98
- **Figur 9:**: Entschwefelungsverhalten einer Schwefelfalle bei 640°C und Absenken der Luftzahl auf einen Wert von 0,95
- **Figur 10:**: Dauer der Entschwefelung in Abhängigkeit von der Luftzahl
- **Figur 11:**: Prozentanteile von Schwefeldioxid und Schwefelwasserstoff im Abgas hinter der Schwefelfalle bei verschiedenen Luftzahlen während der Entschwefelung

### Beispiel 1

Es wurden drei verschieden zusammengesetzte Mg/Al-Hydrotalcite I, II und III zur Herstellung des Speichermaterials verwendet. Zur Überführung in das Speichermaterial wurden die Hydrotalcite für die Dauer von 4 Stunden bei 550°C kalziniert.

Tabelle 1 zeigt die Molverhältnisse für diese drei Materialien und ihre spezifischen Oberflächen nach DIN 66132 im Frischzustand sowie nach vierstündiger Kalzinierung bei 550°C (Überführung in das erfindungsgemäße Speichermaterial) und nach Kalzinierung bei 1050°C für die Dauer von 24 Stunden. Das Speichermaterial besitzt nach dieser Kalzinierung noch immer eine spezifische Oberfläche von wenigstens 20 m²/g.

**Tabelle 1**

| | Mg/Al-Hydrotalcit | | |
|---|---|---|---|
| | I | II | III |
| Molverhältnis MgO/Al₂O₃ | 5,7 | 2,6 | 1,3 |
| Spezifische Oberfläche | | | |
| frisch [m²/g] | 200 | 235 | 256 |
| 550°C 4 h [m²/g] | 155 | 200 | 214 |
| 1050°C 24 h [m²/g] | 56 | 37 | 26 |

### Beispiel 2

Es wurde eine wäßrige Dispersion von γ-Al₂O₃ (spezifische Oberfläche 140 m²/g, Partikelgröße d₅₀ = 4 µm) und Mg/Al-Hydrotalcit (Partikelgröße d₅₀ = 4 µm) mit einem Gewichtsverhältnis Mg/Al-Hydrotalcit zu γ-Al₂O₃ von 14:3 angefertigt. Der verwendet Mg/Al-Hydrotalcit wies ein Molverhältnis MgO/Al₂O₃ von 2,6 auf. Er wurde in einer Vorbehandlung bei 550°C für die Dauer von 4 Stunden an Luft kalziniert und so in das Speichermaterial überführt. Danach besaß das Material noch eine spezifische Oberfläche von 200 m²/g (Hydrotalcit II von Beispiel 1).

Es wurden mehrere Wabenkörper aus Cordierit mit einer Zelldichte von 62 cm⁻² und einem Volumen von 0,8 Litern durch Tauchen in diese Dispersion mit insgesamt 170 g Trockenmasse pro Liter Wabenkörpervolumen beschichtet (140 g/l Hydrotalcit und 30 g/l γ-Al₂O₃). Die Beschichtung wurde bei 120°C getrocknet und 2 Stunden bei 500°C an Luft kalziniert. Anschließend wurden die beschichteten Wabenkörper durch Tauchen in eine wäßrige Lösung von Platintetraamminnitrat Pt(NH₃)₄(NO₃)₂ imprägniert, bei 120°C getrocknet und bei 500°C für 2 Stunden an Luft kalziniert. Die fertigen Schwefelfallen enthielten 2 g Platin pro Liter Wabenkörper.

### Beispiel 3

Eine in Beispiel 2 hergestellte Schwefelfalle wurde durch Tauchen in eine wäßrige Lösung von Kalziumnitrat, Trocknen bei 120°C und Kalzinieren bei 500°C an Luft mit 10 g Kalziumoxid pro Liter Volumen der Schwefelfalle beladen.

### Beispiel 4

Eine weitere in Beispiel 2 hergestellte Schwefelfalle wurde durch Tauchen in eine wäßrige Lösung von Strontiumacetat, Trocknen bei 120°C und Kalzinieren bei 500°C an Luft mit 17,5 g Strontiumoxid pro Liter beladen.

### Beispiel 5

Eine weitere in Beispiel 2 hergestellte Schwefelfalle wurde durch Tauchen in eine wäßrige Lösung von Bariumacetat, Trocknen bei 120°C und Kalzinieren bei 500°C an Luft mit 26,0 g Bariumoxid pro Liter beladen.

### Beispiel 6

Eine weitere in Beispiel 2 hergestellte Schwefelfalle wurde durch Tauchen in eine wäßrige Lösung von Lanthanacetat, Trocknen bei 120°C und Kalzinieren bei 500°C an Luft mit 18,5 g Lanthanoxid pro Liter beladen.

### Vergleichsbeispiel 1

Zur Herstellung einer konventionellen Schwefelfalle wurde eine wäßrige Dispersion von γ-Al₂O₃ (spezifische Oberfläche 140 m²/g, Partikelgröße d₅₀ = 4 µm) angefertigt und ein weiterer Wabenkörper aus Cordierit durch Tauchen in diese Dispersion mit 160 g γ-Al₂O₃ pro Liter Wabenkörpervolumen beschichtet. Die Beschichtung wurde bei 120°C getrocknet und 2 Stunden bei 500°C an Luft kalziniert.

Die Beschichtung wurde mit einer wäßrigen Lösung von Platintetraamminnitrat imprägniert, erneut bei 120°C getrocknet und bei 500°C für die Dauer von 2 Stunden an Luft kalziniert. Die fertige Beschichtung enthielt 2 g Platin pro Liter des Wabenkörpervolumens. Im Anschluß daran wurde die Beschichtung durch erneutes Tauchen in eine wäßrige Lösung von Eisen(III)nitrat imprägniert, bei 120°C getrocknet und bei 500°C an Luft kalziniert. Die kalzinierte Beschichtung enthielt Eisen in einer Menge von 9,1 g pro Liter, berechnet als Eisen(III)oxid.

### Vergleichsbeispiel 2

Es wurde eine weitere konventionelle Schwefelfalle nach Vergleichsbeispiel 1 hergestellt. Im Unterschied zu Vergieichsbeispiel 1 wurde die Beschichtung nicht mit Eisennitrat, sondern mit Manganacetat imprägniert. Die fertige Schwefelfalle enthielt Mangan in einer Menge von 14,8 g pro Liter Wabenkörpervolumen, berechnet als Mangan(IV)oxid.

### Vergleichsbeispiel 3

Es wurde eine weitere konventionelle Schwefelfalle nach Vergleichsbeispiel 1 hergestellt. Im Unterschied zu Vergleichsbeispiel 1 wurde die Beschichtung nicht mit Eisennitrat sondern mit Cernitrat imprägniert. Die fertige Schwefelfalle enthielt Cer in einer Menge von 29,2 g pro Liter Wabenkörpervolumen, berechnet als Cer(IV)oxid.

Die Zusammensetzung der in den vorstehenden Beispielen angefertigten Schwefelfallen sind in Tabelle 2 zusammengefaßt.

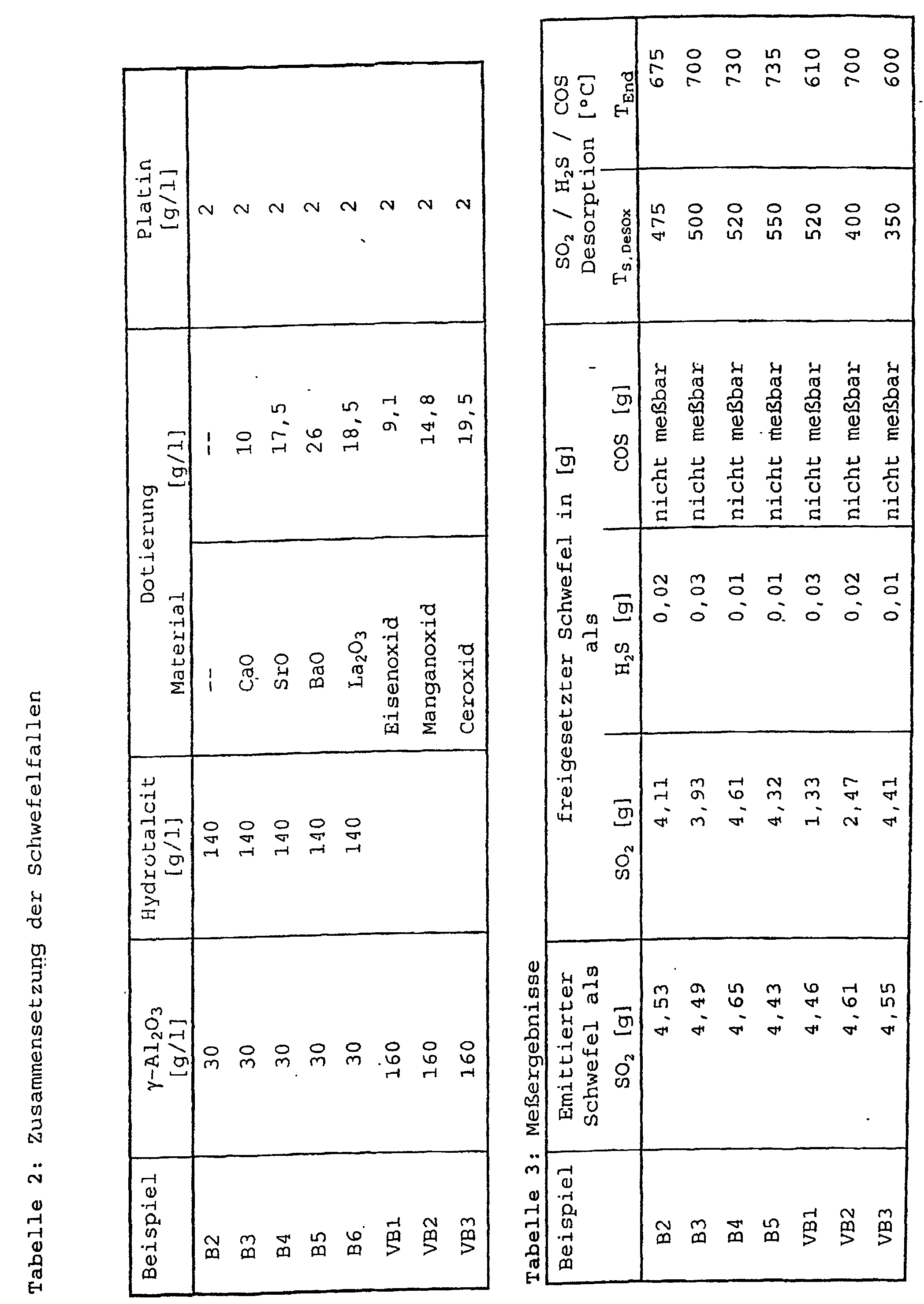

### Anwendungsbeispiel 1

Für den wirkungsvollen Einsatz einer Schwefelfalle in Verbindung mit einem Stickoxid-Speicherkatalysator ist ihre Speicherkapazität unter mageren Abgasbedingungen, die Vermeidung von Sekundäremissionen bei der Freisetzung des gespeicherten Schwefels in Form von Schwefelwasserstoff H₂S und Carbonylsulfid COS sowie die Entschwefelungstemperatur T_{S,DeSOx} und die Freisetzungsrate für die Schwefeloxide in Abhängigkeit von Abgastemperatur und Luftzahl des Abgases von Bedeutung.

Zur Beurteilung der Schwefelfallen gemäß der Beispiele 2 bis 5 sowie der Vergleichsbeispiele 1 bis 3 wurden daher folgende Untersuchungen durchgeführt:

Die in den Beispielen beschriebenen Schwefelfallen wurden zunächst für 5 Stunden an einem mageren Ottomotor, welcher bei einer Luftzahl von 1,5 betrieben wurde unter Verwendung von Kraftstoff mit 400 Gew.-ppm Schwefelgehalt mit Schwefel beladen. Die Abgastemperatur vor der Schwefelfalle betrug dabei 400°C. Die eingesetzten Schwefelfallen hatten ein Volumen von jeweils 0,8 Liter. Der Durchsatz des Abgases betrug 42000 Nl/h.

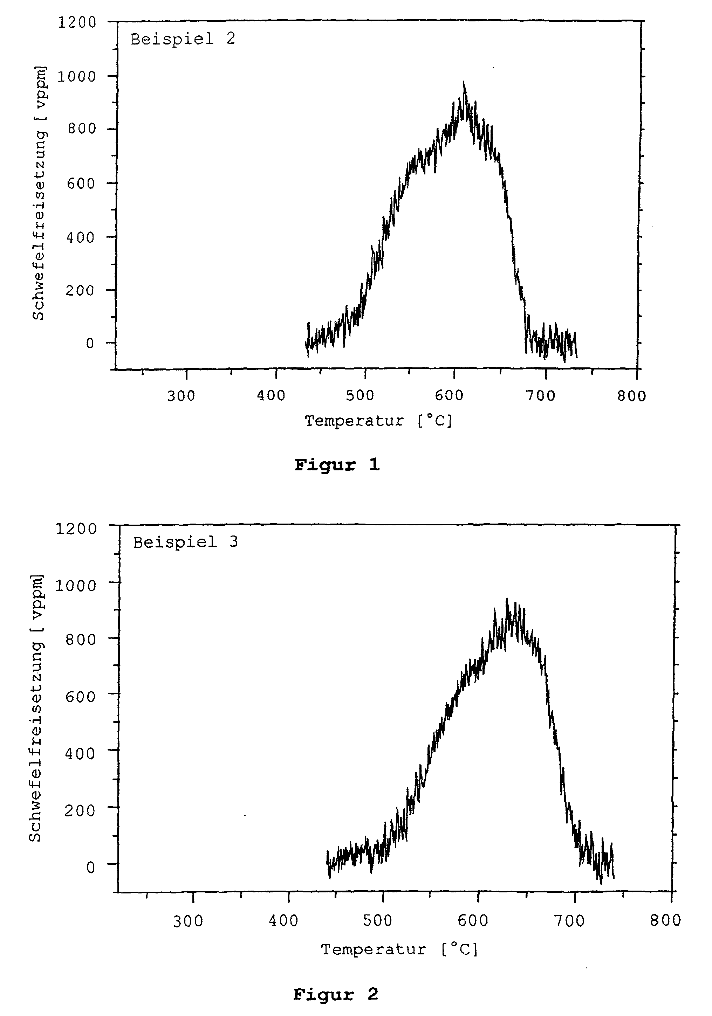

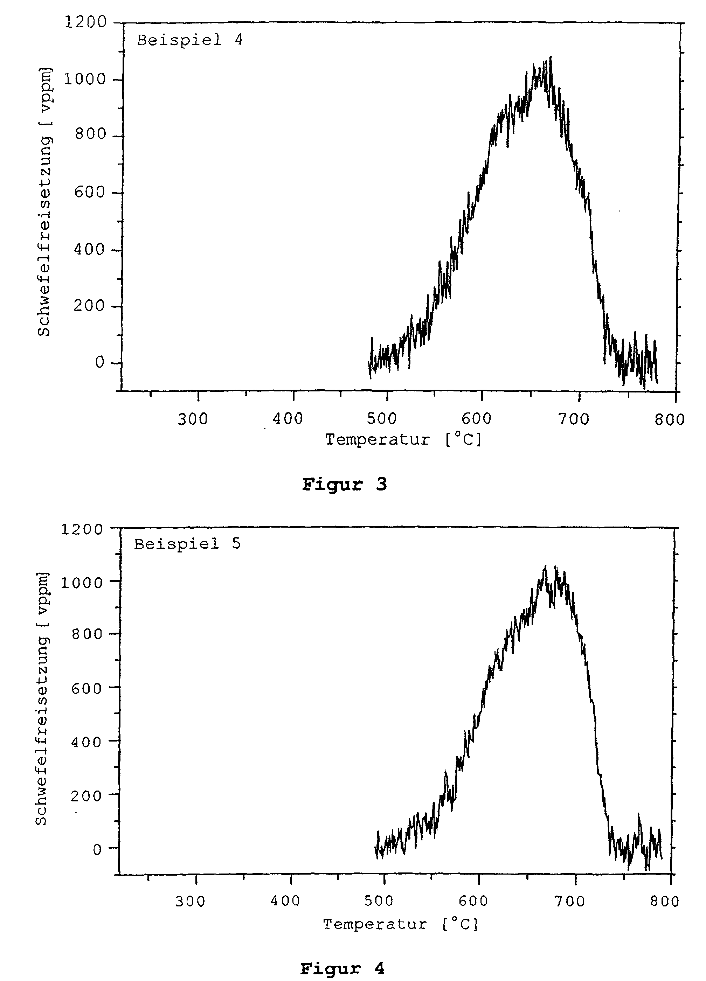

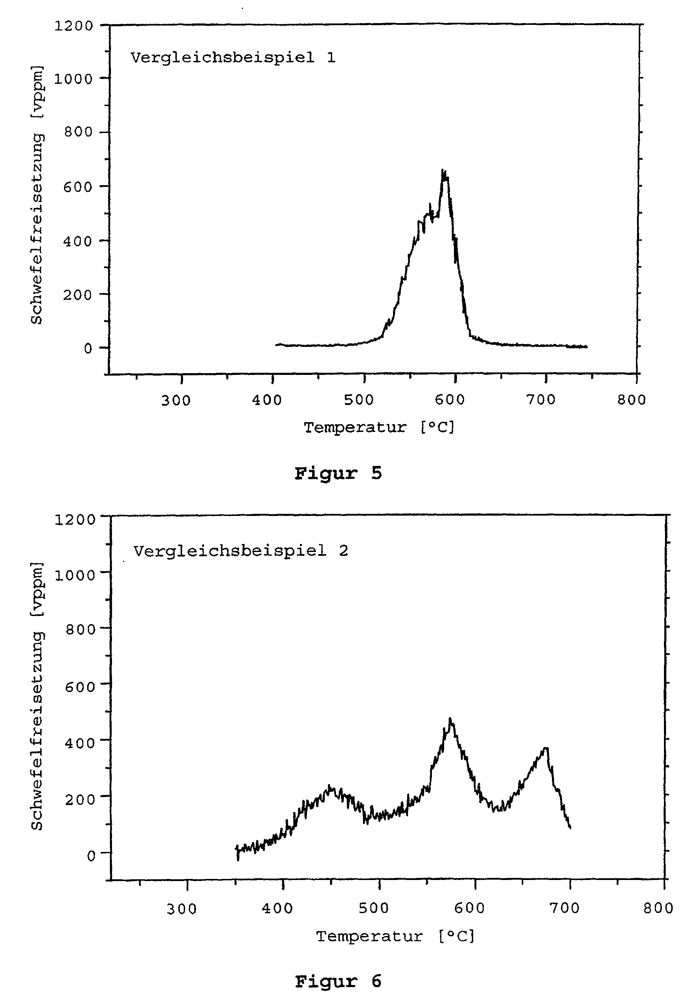

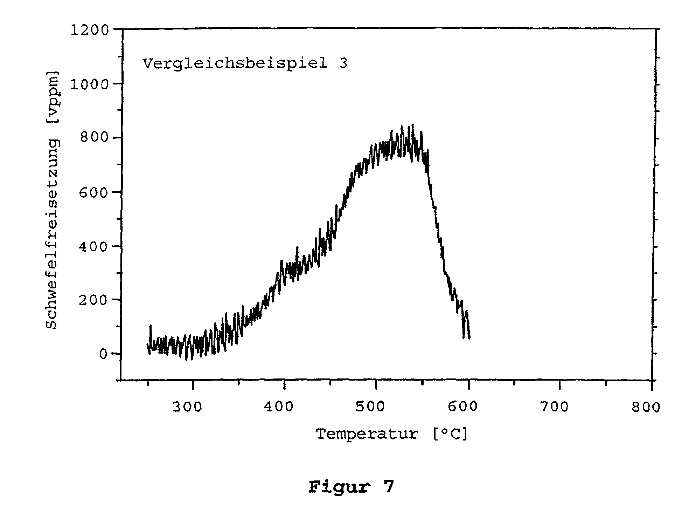

Zunächst wurden die Rohemissionen des Motors an Schwefeldioxid, Schwefelwasserstoff und Carbonylsulfid mit einem Ionen-Molekülreaktionsmassenspektrometer (IMR-MS) ermittelt. Nach Einbau der jeweiligen Schwefelfalle in die Abgasanlage wurde der zeitliche Verlauf der Emissionen hinter der Schwefelfalle gemessen. Aus diesen Meßwerten wurden sowohl die vom Motor emittierte Schwefelmenge als auch die von den Schwefelfallen aufgenommenen Schwefelmengen durch Integration über der Zeit berechnet. Anschließend wurden die Schwefelfallen bei einer Luftzahl von 0,98 langsam auf 750°C aufgeheizt. Mit Hilfe des IMR-MS wurden die von den Schwefelfallen abgegebenen Konzentrationen an Schwefeldioxid, Schwefelwasserstoff und Carbonylsulfid im Abgasstrom während des Aufheizvorganges in Abhängigkeit von Zeit und Temperatur bestimmt. Die Ergebnisse der Untersuchungen sind in Tabelle 3 sowie in den Figuren 1 bis 7 dargestellt.

Die Messungen zeigen, daß von den Schwefelfallen der Beispiele 2 bis 5 während der Magerlaufzeit die vom Motor emittierten Schwefelmengen annähernd quantitativ aufgenommen wurden. Während der Entschwefelung im fetten Abgas konnte der Schwefel wieder weitgehend quantitativ freigesetzt werden. Das Vergleichsbeispiel 1 zeigt dagegen eine deutlich niedrigere Schwefelaufnahme. Die Entschwefelung verläuft allerdings auch hier annähernd quantitativ. Vergleichsbeispiel 2 zeigt einen sehr breiten Desorptionsbereich für den Schwefel, der ein schnelles Entschwefeln der Schwefelfalle nicht zuläßt. Außerdem beginnt die Entschwefelung ebenso wie bei Vergleichsbeispiel 3 schon bei sehr niedrigen Temperaturen. Eine Überlappung der Schwefelfreisetzung mit dem Aktivitätsfenster üblicher Speicherkatalysatoren kann damit nicht verhindert werden.

Die letzten beiden Spalten in Tabelle 3 geben die Temperatur des Abgases bei Beginn der Entschwefelung T_{S,DeSOx} sowie die Endtemperatur T_{End} nach Abschluß der Entschwefelung an. Die Differenz zwischen beiden sollte möglichst gering sein, um eine schnelle Entschwefelung der Schwefelfalle zu gewährleisten. Bei den erfindungsgemäßen Beispielen 1 bis 4 liegt die Temperaturdifferenz bei 200, 210 und 185°C. Bei den Vergleichsbeispielen VB2 und VB3 wurden Werte von 300 und 250°C gemessen. Die Temperaturdifferenz in Vergleichsbeispiel 1 beträgt nur 90°C.

Die Untersuchungen zeigen weiterhin, daß die Sekundäremissionen an Schwefelwasserstoff und Carbonylsulfid bei dem für die Entschwefelung gewählten Wert der Luftzahl von 0,98 bei allen Beispielen und Vergleichsbeispielen nur Bruchteile der Schwefeldioxid-Emissionen darstellen.

Die Sekundäremissionen hängen im wesentlichen von der für die Entschwefelung verwendeten Luftzahl des Abgases ab. Wie die folgenden Untersuchungen zeigen, gibt es zwei bevorzugte Bereiche der Luftzahl für die Entschwefelung. Der erste Bereich liegt nahe am stöchiometrischen Punkt zwischen etwa 0,97 und 1,0, der zweite zwischen 0,6 und 0,8.

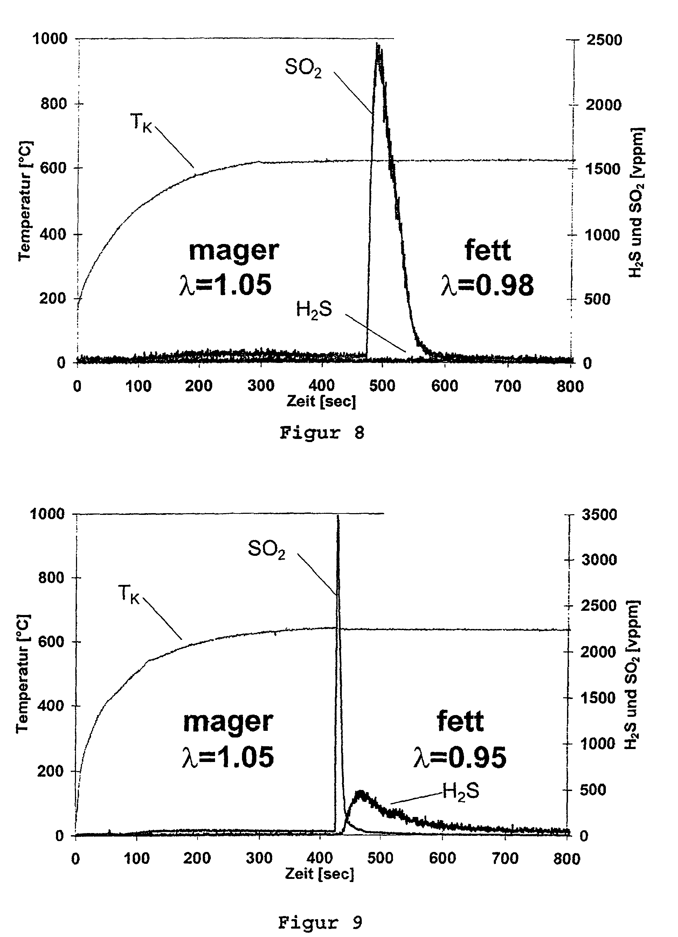

Zur Bestimmung der für die Entschwefelung benötigten Zeit wurde ein Exemplar der Schwefelfallen von Beispiel 1 wie zuvor an einem mager betriebenen Ottomotor bei 400°C für die Dauer von 5 Stunden unter Verwendung von Kraftstoff mit einem Schwefelgehalt von 400 Gew.-ppm mit Schwefel beladen. Das Volumen der Schwefelfalle betrug 0,8 Liter. Anschließend wurde die Abgastemperatur bei einer Luftzahl von 1,05 bis auf eine Temperatur von 640°C aufgeheizt. Nach Erreichen dieser Temperatur wurde die Luftzahl auf einen Wert von 0,98 und in einem zweiten Durchgang auf einen Wert von 0,95 abgesenkt. Der Volumenstrom des Abgases betrug dabei etwa 102000 Nl/h. Das Entschwefelungsverhalten ist in den Figuren 8 und 9 in Abhängigkeit von der Zeit dargestellt.

Wird die Entschwefelung bei einer Luftzahl von 0,95 (Figur 9) durchgeführt, so gibt die Schwefelfalle einen großen Teil der Sulfate zunächst innerhalb einer kurzen Zeit in Form von Schwefeldioxid frei. Allerdings wird ein erheblicher Teil des gespeicherten Schwefels in Form von Schwefelwasserstoff über einen längeren Zeitraum emittiert. Diese langsame Freisetzung von Schwefelwasserstoff ist verantwortlich dafür, daß für die Entschwefelung eine relativ lange Zeit benötigt wird.

Wird die Entschwefelung dagegen bei einer Luftzahl von 0,98 (Figur 8) durchgeführt, so wird der Schwefel ausschließlich in Form von Schwefeldioxid freigesetzt. Die Freisetzung des Schwefeldioxids dauert hierbei zwar länger als bei λ=0,95, das Fehlen einer zeitlich stark ausgedehnten Freisetzung von Schwefelwasserstoff führt aber dazu, daß die Dauer der Entschwefelung im Falle von λ=0,98 insgesamt deutlich kürzer ist.

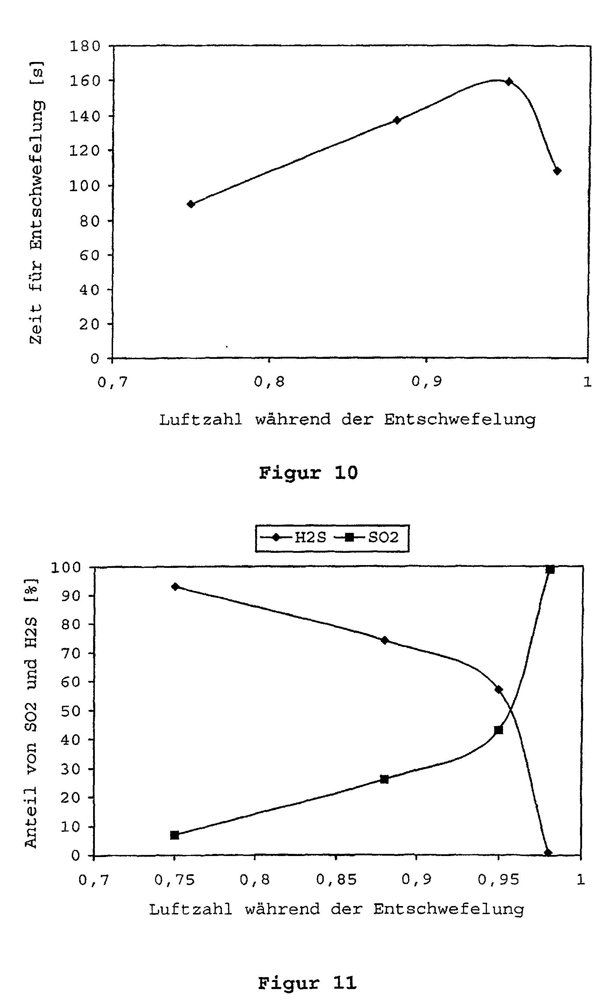

Figur 10 zeigt die Dauer der Entschwefelung bei vier verschiedenen Luftzahlen. Während eine Luftzahl von 0,98 einen in Hinsicht auf die Entschwefelungsdauer sowie Unterdrükkung von Schwefelwasserstoff günstigen Wert darstellt, ist es möglich, die Dauer der Entschwefelung durch starkes Absenken der Luftzahl weiter zu verringern. So wird bei einer Luftzahl von 0,75 eine schnellere Entschwefelung erreicht als bei einer Luftzahl von 0,98. Allerdings wird hierbei der freigesetzte Schwefel nahezu quantitativ in Schwefelwasserstoff überführt und muß in diesem Fall durch gesonderte Maßnahmen wieder zu Schwefeldioxid oxidiert werden.

Figur 11 zeigt die Prozentanteile von Schwefelwasserstoff und Schwefeldioxid im Abgas hinter der Schwefelfalle in Abhängigkeit von der Luftzahl während der Entschwefelung. Diese Verhältnisse hängen stark vom Volumen der eingesetzten Schwefelfalle und somit von der Verweilzeit des freigesetzten Schwefeldioxids in der Schwefelfalle ab. Je größer die Verweilzeit im Bereich der Schwefelfalle ist, um so mehr Schwefelwasserstoff wird gebildet.

## Patentansprüche

1. Verfahren zur Reinigung der Abgase einer Brennkraftmaschine zur Entfernung der Schwefeloxide aus dem Abgas umfassend Kontaktieren der Abgase mit einem Speichermaterial für Schwefeloxide enthaltend ein Magnesium-Aluminat-Spinell (MgO·Al₂O₃), wobei
das Speichermaterial ein Molverhältnis von Magnesiumoxid zu Aluminiumoxid von über 1,1:1 aufweist und das im stöchiometrischen Überschuß vorhandene Magnesiumoxid homogen in hochdisperser Form im Speichermaterial verteilt ist.

2. Verfahren nach Anspruch 1, wobei das Speichermaterial
mit wenigstens einem der Erdalkalimetalloxide Kalziumoxid, Strontiumoxid, Bariumoxid in einer Menge von 1 bis 40 Gew.-%, bezogen auf das Gesamtgewicht des Materials, dotiert ist.

3. Verfahren nach Anspruch 2, wobei das Speichermaterial zusätzlich wenigstens ein Seltenerdoxid in einer Menge von 1 bis 40 Gew.-%, bezogen auf das Gesamtgewicht des Materials, enthält.

4. Verfahren nach Anspruch 2 oder 3, wobei das Speichermaterial eine spezifische Oberfläche von 100 bis 300 m²/g aufweist.

5. Verfahren nach Anspruch 3, wobei das Speichermaterial nach Kalzination bei 1050°C für die Dauer von 24 Stunden noch eine spezifische Oberfläche von mindestens 20 m²/g aufweist.

6. Verfahren nach einem der vorstehenden Ansprüche, wobei das Speichermaterial
wenigstens eines der Platinmetalle Platin, Palladium und Rhodium in einer Menge von 0,01 bis 5 Gew.-%, bezogen auf das Gewicht des Speichermaterials enthält.

7. Verfahren nach Anspruch 1, wobei das Speichermaterial
zusätzlich Zeolithe, Titandioxid und/oder Aluminiumoxid in einem Gewichtsverhältnis des Speichermaterials zu den Zusatzstoffen von 1:5 bis 20:1 enthält.

8. Verfahren nach Anspruch 1, wobei das Speichermaterial für Schwefeloxide durch Kalzinieren eines
Magnesium/Aluminium-Hydrotalcits mit einem Molverhältnis von Magnesiumoxid zu Aluminiumoxid von 1,1:1 bis 10:1 bei einer Temperatur von 400 bis 600°C für die Dauer von 1 bis 10 Stunden erhättlich ist.

9. Verfahren nach Anspruch 8, wobei
das Speichermaterial nach dem Kalzinieren mit wenigstens einer löslichen Vorläuferverbindung der Erdalkalimetalloxide Kalziumoxid, Strontiumoxid und Bariumoxid imprägniert und anschließend erneut kalziniert wird.

10. Verfahren nach Anspruch 9, wobei
das Speichermaterial zusätzlich mit wenigstens einer löslichen Vorläuferverbindung der Seltenerdoxide imprägniert und anschließend erneut kalziniert wird.

11. Verfahren nach Anspruch 10, wobei
das Speichermaterial nach dem Kalzinieren mit einer löslichen Vorläuferverbindung wenigstens eines der Platingruppenmetalle Platin, Palladium und Rhodium imprägniert wird.

12. Verfahren nach Anspruch 8, wobei
das Speichermaterial nach dem Kalzinieren mit wenigstens einer löslichen Vorstufe der Erdalkalimetalloxide Kalziumoxid, Strontiumoxid und Bariumoxid, mit löslichen Vorstufen wenigstens eines Seltenerdoxides und mit einer löslichen Vorstufe wenigstens eines der Platingruppenmetalle Platin, Palladium und Rhodium imprägniert und anschließend erneut kalziniert wird.

## Claims

1. A process for the treatment of exhaust gases from an internal combustion engine comprising bringing the exhaust gases into contact with a storage material for sulfur oxides containing a magnesium aluminate spinel (MgO·Al₂O₃), wherein
the storage material has a molar ratio of magnesium oxide to aluminium oxide of more than 1.1:1 and the magnesium oxide present in stoichiometric excess is distributed homogeneously in highly disperse form in the storage material.

2. A process according to Claim 1,
wherein the storage material is doped with at least one of the alkaline earth metal oxides calcium oxide, strontium oxide, barium oxide in an amount of 1 to 40 wt.%, with respect to the total weight of the material.

3. A process according to Claim 2,
wherein the storage material also contains at least one rare earth oxide in an amount of 1 to 40 wt.%, with respect to the total weight of the material.

4. A process according to Claim 2 or 3,
wherein the storage material has a specific surface area of 100 to 300 m²/g.

5. A process according to Claim 3,
wherein the storage material still has a specific surface area of at least 20 m²/g after calcination at 1050°C for a period of 24 hours.

6. A process according to one of the preceding Claims,
wherein the storage material contains at least one of the platinum metals platinum, palladium and rhodium in an amount of 0.01 to 5 wt.%, with respect to the weight of the storage material.

7. A process according to Claim 1,
wherein the storage material also contains zeolites, titanium dioxide and/or aluminium oxide in a ratio by weight of storage material to added substance of 1:5 to 20:1.

8. A process according to Claim 1,
wherein the storage material for sulfur oxides is obtainable by calcining a magnesium/aluminium hydrotalcite with a molar ratio of magnesium oxide to aluminium oxide of 1.1:1 to 10:1 at a temperature of 400 to 600°C for a period of 1 to 10 hours.

9. A process according to Claim 8,
wherein the storage material, after calcination, is impregnated with at least one soluble precursor compound of the alkaline earth metal oxides calcium oxide, strontium oxide and barium oxide and is then calcined again.

10. A process according to Claim 9,
wherein the storage material is also impregnated with at least one soluble precursor compound of the rare earth oxides and is then calcined again.

11. A process according to Claim 10,
wherein the storage material, after calcination, is impregnated with a soluble precursor compound of at least one of the platinum group metals platinum, palladium and rhodium.

12. A process according to Claim 8,
wherein the storage material, after calcination, is impregnated with at least one soluble precursor of the alkaline earth metal oxides calcium oxide, strontium oxide and barium oxide, with soluble precursors of at least one rare earth oxide and with a soluble precursor of at least one of the platinum group metals platinum, palladium and rhodium and is then calcined again.

## Revendications

1. Procédé d'épuration des gaz d'échappement d'un moteur à combustion interne, selon lequel les gaz d'échappement sont mis en contact avec un matériau d'accumulation des oxydes de soufre, contenant une spinelle-aluminate de magnésium (MgO·Al₂O₃),
selon lequel
le matériau d'accumulation a un rapport molaire d'oxyde de magnésium sur oxyde d'aluminium supérieur à 1,1:1, et
l'oxyde de magnésium en excédent stoechiométrique est réparti de façon homogène sous une forme très dispersée dans le matériau d'accumulation.

2. Procédé selon la revendication 1,
selon lequel
le matériau d'accumulation est dopé avec au moins l'un des oxydes alcalinoterreux oxyde de calcium, oxyde de strontium, oxyde de baryum, selon un pourcentage pondéral de 1 à 40% par rapport au poids total du matériau.

3. Procédé selon la revendication 2,
selon lequel
le matériau d'accumulation contient en plus au moins un oxyde de terres rares, dans un pourcentage pondéral de 1 à 40 % par rapport au poids total du matériau.

4. Procédé selon les revendications 2 ou 3,
selon lequel
le matériau d'accumulation présente une surface spécifique de 100 à 300 m²/g.

5. Procédé selon la revendication 3,
selon lequel
après calcination à 1050°C pendant une durée de 24 heures, le matériau d'accumulation présente encore une surface spécifique d'au moins 20 m²/g.

6. Procédé selon l'une des revendications précédentes,
selon lequel
au moins l'un des métaux du groupe du platine, à savoir le platine, le palladium et le rhodium, est présent en pourcentage pondéral de 0,01 à 5 % par rapport au poids total du matériau.

7. Procédé selon la revendication 1,
selon lequel
le matériau d'accumulation contient en plus des zéolithes, du dioxyde de titane et/ou de l'oxyde d'aluminium, dans un rapport pondéral matériau par rapport aux additifs compris entre 1/5 jusqu'à 20/l.

8. Procédé selon la revendication 1,
selon lequel
le matériau d'accumulation des oxydes de soufre est obtenu par calcination d'un hydrotalcite magnésium-aluminium ayant un rapport molaire oxyde de magnésium/oxyde d'aluminium de 1,1:1 jusqu'à 10:1 pour une température de 400 à 600°C pendant une durée de 1 à 10 heures.

9. Procédé selon la revendication 8,
selon lequel
le matériau d'accumulation après calcination est imprégné d'au moins n composé précurseur soluble pour les oxydes de métaux alcalinoterreux, oxyde de calcium, oxyde de strontium, oxyde de baryum et ensuite on renouvelle la calcination.

10. Procédé selon la revendication 9,
selon lequel
le matériau d'accumulation est en outre imprégné avec au moins un composé précurseur soluble, des oxydes de terres rares, et ensuite on renouvelle la calcination.

11. Procédé selon la revendication 10,
selon lequel
le matériau d'accumulation, après calcination, est imprégné avec un composé précurseur soluble d'au moins l'un des métaux du groupe du platine, à savoir le platine, le palladium et le rhodium.

12. Procédé selon la revendication 8,
selon lequel
après calcination, on imprègne le matériau d'accumulation avec au moins un composé précurseur : soluble des oxydes de métaux alcalinoterreux, oxyde de calcium, oxyde de strontium et oxyde de baryum, avec au moins un composé précurseur soluble d'au moins un oxyde de terres rares et avec un composé précurseur soluble d'au moins l'un des métaux du groupe du platine, à savoir le platine, le palladium et le rhodium, et ensuite on renouvelle la calcination.
